# FASCICULE DE BREVET EUROPEEN

(11) **EP 4 464 532 B1**
(45) Date de publication et mention de la délivrance du brevet: **20.08.2025**
(21) Numéro de dépôt: 24176115.4
(22) Date de dépôt: 15.05.2024
(51) Int. Cl.: B60K 28/06, B61C 17/12

(54) **SYSTÈME DE SÉCURITÉ POUR VÉHICULE, NOTAMMENT POUR VÉHICULE FERROVIAIRE**
SICHERHEITSSYSTEM FÜR EIN FAHRZEUG, INSBESONDERE FÜR EIN SCHIENENFAHRZEUG
SAFETY SYSTEM FOR A VEHICLE, IN PARTICULAR FOR A RAIL VEHICLE

(30) Priorité: 16.05.2023 FR 2304850
(43) Date de publication de la demande: 20.11.2024
(73) Titulaire: SpeedInnov, 75008 Paris (FR)
(72) Inventeur: PALLAS, Fabrice, 17340 Yves (FR); LEONARDI, Hugo, 17000 La Rochelle (FR)
(74) Mandataire: Plasseraud IP

(56) Documents cités:
- CN-A- 108 810 798
- US-A1- 2010 314 190
- US-A1- 2011 084 820
- US-B2- 7 287 617

## Description

La présente invention concerne un système de sécurité pour véhicule, notamment pour véhicule ferroviaire, comprenant au moins un éthylomètre embarqué relié à un centre de commande du véhicule pour conditionner la mise en marche du véhicule à un résultat de test éthylique.

Un tel système de sécurité vise à assurer la sécurité de passagers en vérifiant le taux d'alcoolémie du conducteur, et en interdisant la mise en marche du véhicule en cas de test éthylique positif.

De tels systèmes de sécurité pour véhicule comprenant un éthylomètre sont connus des documents US 7 287 617 B2, US 2011/084820 A1, US 2010/314190 A1, et CN 108 810 798 A.

L'invention a notamment pour but de perfectionner un tel système de sécurité, notamment pour éviter qu'un faux positif entraine un blocage indu du véhicule.

A cet effet, l'invention a notamment pour objet un système de sécurité pour un véhicule, notamment pour véhicule ferroviaire, comportant au moins un éthylomètre embarqué relié à un centre de commande du véhicule pour conditionner la mise en marche du véhicule à un résultat de test éthylique, le centre de commande étant configuré pour autoriser la mise en marche du véhicule lorsqu'un test éthylique présente un résultat négatif et bloquer la mise en marche lorsque le test éthylique présente un résultat positif, caractérisé en ce que le système de sécurité comporte au moins un éthylomètre externe, et le centre de commande comporte des moyens pour autoriser la mise en marche du véhicule lorsque deux tests éthyliques successifs présentent un résultat positif, mais qu'un test éthylique effectué par l'éthylomètre externe présente un résultat négatif.

L'éthylomètre externe permet de détecter une défaillance de l'éthylomètre embarqué. Dans ce cas, le système de sécurité est court-circuité pour permettre la mise en marche du véhicule sans prendre en compte l'éthylomètre embarqué, et cela jusqu'à la maintenance de ce dernier.

Un système de sécurité selon l'invention peut comporter en outre l'une ou plusieurs des caractéristiques suivantes, prises seules ou selon toutes combinaisons techniquement envisageables.
- Le système de sécurité comporte un dispositif d'identification de conducteur, destiné à déterminer un identifiant du conducteur, et relié à l'éthylomètre pour associer chaque test éthylique à l'identifiant de conducteur.
- Le centre de commande est configuré pour requérir un nouveau test éthylique après un test négatif lorsque le dispositif d'identification de conducteur identifie un nouvel identifiant.
- Le centre de commande est configuré pour requérir un nouveau test éthylique après un test négatif lorsque le véhicule a été arrêté pendant une première durée prédéterminée, et que le test négatif a été effectué depuis une durée supérieure à une seconde durée prédéterminée, par exemple 30 minutes.
- Le système de sécurité est destiné à équiper un véhicule ferroviaire comprenant au moins deux cabines de conduite, le système de sécurité comportant au moins un éthylomètre par cabine de conduite.
- Les moyens pour autoriser la mise en marche du véhicule sont sécurisés pour n'être activés que par des personnes préalablement autorisées, par exemple identifiées par badge et/ou mot de passe.
- Le système de sécurité comporte des moyens d'affichages d'instructions de la marche à suivre pour la mise en marche du véhicule, à destination du conducteur.

L'invention concerne également un véhicule, caractérisé en ce qu'il comporte un système de sécurité tel que défini précédemment.

L'invention concerne enfin un procédé de sécurité pour véhicule, au moyen d'un système de sécurité tel que défini précédemment, comportant :
- la réalisation d'un premier test éthylique au moyen de l'éthylomètre embarqué, et la mise en marche du véhicule si le premier test éthylique est négatif,
- si le premier test éthylique est positif, la réalisation d'un second test éthylique au moyen de l'éthylomètre embarqué, et la mise en marche du véhicule si le second test éthylique est négatif,
- si le second test éthylique est positif, la réalisation d'un troisième test éthylique au moyen de l'éthylomètre externe, l'immobilisation du véhicule étant confirmée si le troisième test éthylique est positif, et
- si le troisième test éthylique est négatif, l'activation des moyens pour autoriser la mise en marche du véhicule.

Différents aspects et avantages de l'invention seront mis en lumière dans la description qui va suivre, donnée uniquement à titre d'exemple non limitatif et faite en se référant à la figure annexée :

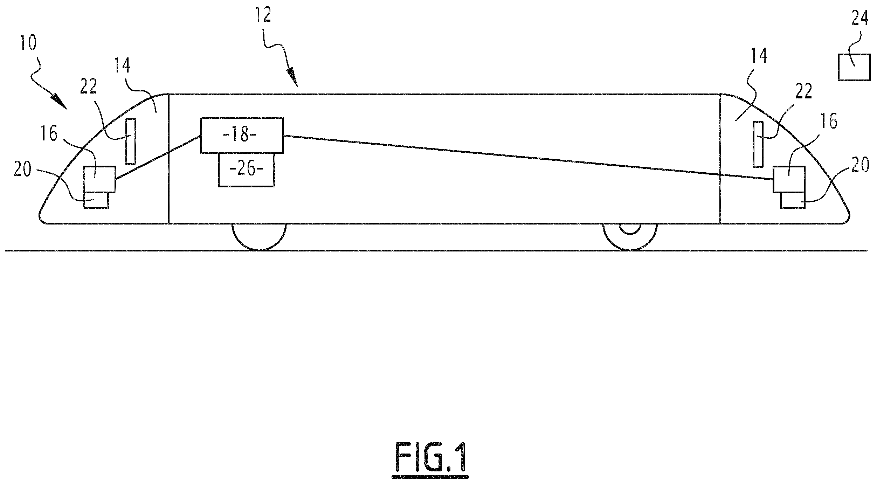

[Fig 1] La figure 1 représente schématiquement un système de sécurité selon un exemple de mode de réalisation de l'invention.

On a représenté, sur la figure 1, un système de sécurité 10 équipant un véhicule, qui est par exemple un véhicule ferroviaire 12.

Le véhicule ferroviaire 12 comporte par exemple, de manière classique, deux cabines de conduite 14, disposées à chaque extrémité du véhicule ferroviaire 12.

Le système de sécurité 10 selon l'invention comporte au moins un éthylomètre 16 embarqué, relié à un centre de commande 18 du véhicule ferroviaire 12. Le centre de commande 18 est de préférence un Système de contrôle et de gestion de train (TCMS, acronyme anglais de Train Control and Management System).

Plus particulièrement, dans l'exemple décrit, le système de sécurité 10 comporte un éthylomètre 16 dans chaque cabine de conduite 14.

Le centre de commande 18 est configuré pour conditionner la mise en marche du véhicule ferroviaire 12 à un résultat de test éthylique. Plus particulièrement, le centre de commande 18 est configuré pour autoriser la mise en marche du véhicule ferroviaire 12 lorsqu'un test éthylique présente un résultat négatif.

En revanche, la mise en marche n'est pas autorisée lorsque le résultat du test éthylique est positif.

Avantageusement, le système de sécurité 10 comporte un dispositif d'identification 20 de conducteur, destiné à déterminer un identifiant du conducteur, et relié à l'éthylomètre 16 pour associer chaque test éthylique à l'identifiant de conducteur. Le dispositif d'identification comporte de préférence un détecteur de badge, chaque conducteur étant associé à un badge, et chaque badge étant associé à l'identifiant du conducteur correspondant. De préférence, l'éthylomètre est configuré pour n'être activable qu'après identification du conducteur par le dispositif d'identification.

De préférence, le système de sécurité 12 comporte des moyens 22 d'affichages d'instructions de la marche à suivre pour la mise en marche du véhicule ferroviaire, à destination du conducteur.

Le système de sécurité 10 selon l'invention comporte au moins un éthylomètre externe 24. L'éthylomètre externe 24 est par exemple porté par un agent d'astreinte.

Le centre de commande 18 comporte des moyens 26 pour autoriser la mise en marche du véhicule ferroviaire 12 lorsque deux tests éthyliques successifs présentent un résultat positif, mais qu'un test éthylique effectué par l'éthylomètre externe présente un résultat négatif.

En effet, il est considéré que, si les tests éthyliques réalisés au moyen de l'éthylomètre embarqué 16 sont positifs, mais que le test éthylique réalisé au moyen de l'éthylomètre externe 24 est négatif, alors l'éthylomètre embarqué 16 est considéré comme défectueux. Cet éthylomètre embarqué 16 est alors isolé du système de sécurité 10.

Les moyens 26 d'autorisation de mise en marche sont sécurisés pour n'être activés que par des personnes préalablement autorisées, par exemple par mot de passe ou au moyen d'un badge lu par le dispositif d'identification. La personne autorisée est généralement l'agent d'astreinte portant l'éthylomètre externe 24.

Dans le cas où le véhicule ferroviaire 12 comporte plusieurs éthylomètres, le ou les éthylomètres non isolés peuvent encore être utilisés pour effectuer ultérieurement une autre mise en marche du véhicule ferroviaire 12.

En revanche, si tous les éthylomètres embarqués 16 sont isolés du système de sécurité 10, alors la mise en marche ne peut être effectuée que par les moyens 26 d'autorisation de la mise en marche du véhicule ferroviaire 12.

Lorsqu'un ou plusieurs éthylomètres 16 sont isolés, le système de sécurité 10 revient à un fonctionnement normal après maintenance et/ou remplacement de chaque éthylomètre défectueux.

Avantageusement, le centre de commande 18 est configuré pour requérir un nouveau test éthylique après un test négatif lorsque le dispositif d'identification 20 de conducteur identifie un nouvel identifiant. En effet, lors d'un changement de conducteur, il est nécessaire de tester le taux d'alcoolémie du nouveau conducteur.

De préférence, le centre de commande 18 est également configuré pour requérir un nouveau test éthylique après un test négatif lorsque le véhicule ferroviaire a été arrêté pendant une première durée prédéterminée, et que le test négatif a été effectué depuis une durée supérieure à une seconde durée prédéterminée, par exemple 30 minutes. En effet, il est considéré qu'après une pause d'une certaine durée, il est nécessaire de tester à nouveau le taux d'alcoolémie du conducteur.

Optionnellement, le système de sécurité 10 comprend, en outre, au moins un dispositif supplémentaire de contrôle de l'usage de stupéfiants.

Le fonctionnement du système de sécurité 10 sera maintenant décrit plus en détail, dans un procédé de sécurisation du véhicule ferroviaire 12.

Le procédé de sécurisation comporte une étape préalable d'initialisation du système de sécurité 10. En particulier, en cas de maintenance ou remplacement du ou des éthylomètres, le système de sécurité 10 est réinitialisé.

Le procédé de sécurisation comporte de préférence l'affichage, par les moyens d'affichage, d'instructions à destination du conducteur. Ces instructions concernent toutes les actions qui doivent être effectuées par le conducteur.

Le procédé de sécurisation comporte l'identification du conducteur, par le dispositif d'identification 20. A cet effet, le conducteur insère par exemple un badge personnel dans le dispositif d'identification 20.

L'identification du conducteur permet d'accéder à un menu de test avant mise en marche du véhicule ferroviaire. Ce menu est par exemple accessible sur le dispositif d'affichage.

Le procédé comporte la vérification des éthylomètres embarqués 16.

Dans le cas où tous les éthylomètres du véhicule ferroviaire sont isolés, alors la mise en marche ne peut être effectuée que par les moyens 26 d'autorisation de la mise en marche du véhicule ferroviaire 12.

En variante, la mise en marche peut dans ce cas ne plus être conditionnée à un test éthylique.

Dans le cas où au moins un éthylomètre est opérationnel, un test éthylique est requis.

Cette étape est par exemple requise lorsque l'identifiant du conducteur est différent du précédent identifiant présenté, ce qui correspond à un changement de conducteur.

Cette étape est également requise en cas d'un arrêt prolongé, supérieure à une première durée, et si le dernier test éthylique effectué date de plus d'une seconde durée prédéfinie, notamment 30 minutes.

En revanche, si l'identifiant du conducteur est inchangé, si l'arrêt est inférieur à la première durée, ou si le test éthylique date de moins que la seconde durée, alors il n'est pas nécessaire d'effectuer un nouveau test éthylique peut être passée et le véhicule ferroviaire peut être mis en marche.

Dans le cas où un test éthylique doit être effectué, le procédé comporte une étape de réalisation d'un premier test éthylique.

Si le résultat du premier test éthylique est négatif, alors la procédure de mise en marche du véhicule ferroviaire est enclenchée.

Si le résultat du premier test éthylique est positif, alors un second test éthylique est requis. Celui-ci est effectué avec le même éthylomètre, par exemple après une temporisation de 20 secondes, et un changement d'embout.

Si le résultat du second test éthylique est négatif, alors la procédure de mise en marche du véhicule ferroviaire est enclenchée.

Si le résultat du second test éthylique est positif, alors un troisième test éthylique est requis.

A ce stade, il reste possible au conducteur de réinitialiser le procédé pour recommencer les deux tests éthyliques avec un autre éthylomètre embarqué. L'éthylomètre utilisé précédemment pourra ultérieurement être vérifié pour maintenance.

Dans le cas contraire, le troisième test éthylique est effectué, cette fois au moyen de l'éthylomètre extérieur. L'éthylomètre extérieur est porté par un agent d'astreinte.

Si le résultat du troisième test éthylique est positif, le conducteur est relevé, et sera remplacé par un autre conducteur.

Si le résultat du troisième test éthylique est négatif, alors l'agent d'astreinte s'identifie, par exemple au moyen d'un badge et/ou d'un mot de passe. L'agent d'astreinte isole alors l'éthylomètre embarqué précédemment utilisé, qui est considéré comme défectueux, et devra être vérifié, réparé ou remplacé au cours d'une maintenance ultérieure.

L'agent d'astreinte active également les moyens d'autorisation de la mise en marche du véhicule ferroviaire.

On notera que l'invention n'est pas limitée au mode de réalisation précédemment décrit mais pourrait présenter diverses variantes sans sortir du cadre des revendications.

## Revendications

1. Système de sécurité (10) pour un véhicule, notamment un véhicule ferroviaire (12), comportant au moins un éthylomètre embarqué (16) relié à un centre de commande (18) du véhicule (12) pour conditionner la mise en marche du véhicule (12) à un résultat de test éthylique, le centre de commande (18) étant configuré pour autoriser la mise en marche du véhicule (12) lorsqu'un test éthylique présente un résultat négatif et bloquer la mise en marche lorsque le test éthylique présente un résultat positif, **caractérisé en ce que** le système de sécurité (10) comporte au moins un éthylomètre externe (24), et le centre de commande (18) comporte des moyens (26) pour autoriser la mise en marche du véhicule (12) lorsque deux tests éthyliques successifs présentent un résultat positif, mais qu'un test éthylique effectué par l'éthylomètre externe (24) présente un résultat négatif.

2. Système de sécurité (10) selon la revendication 1, comportant un dispositif (20) d'identification de conducteur, destiné à déterminer un identifiant du conducteur, et relié à l'éthylomètre (16) pour associer chaque test éthylique à l'identifiant de conducteur.

3. Système de sécurité (10) selon la revendication 2, dans lequel le centre de commande (18) est configuré pour requérir un nouveau test éthylique après un test négatif lorsque le dispositif (20) d'identification de conducteur identifie un nouvel identifiant.

4. Système de sécurité (10) selon l'une quelconque des revendications précédentes, dans lequel le centre de commande (18) est configuré pour requérir un nouveau test éthylique après un test négatif lorsque le véhicule (12) a été arrêté pendant une première durée prédéterminée, et que le test négatif a été effectué depuis une durée supérieure à une seconde durée prédéterminée, par exemple 30 minutes.

5. Système de sécurité (10) selon l'une quelconque des revendications précédentes, destiné à équiper un véhicule (12) comprenant au moins deux cabines de conduite (14), le système de sécurité (10) comportant au moins un éthylomètre (16) par cabine de conduite (14).

6. Système de sécurité (10) selon l'une quelconque des revendications précédentes, dans lequel les moyens (26) pour autoriser la mise en marche du véhicule (12) sont sécurisés pour n'être activés que par des personnes préalablement autorisées, par exemple identifiées par badge et/ou mot de passe.

7. Système de sécurité (10) selon l'une quelconque des revendications précédentes, comportant des moyens (22) d'affichages d'instructions de la marche à suivre pour la mise en marche du véhicule, à destination du conducteur.

8. Véhicule, notamment véhicule ferroviaire (12), **caractérisé en ce qu'**il comporte un système de sécurité (10) selon l'une quelconque des revendications précédentes.

9. Procédé de sécurité pour véhicule, notamment pour véhicule ferroviaire (12), au moyen d'un système de sécurité (10) selon l'une quelconque des revendications 1 à 7, comportant :
- la réalisation d'un premier test éthylique au moyen de l'éthylomètre embarqué (16), et la mise en marche du véhicule (12) si le premier test éthylique est négatif,
- si le premier test éthylique est positif, la réalisation d'un second test éthylique au moyen de l'éthylomètre embarqué (16), et la mise en marche du véhicule (12) si le second test éthylique est négatif,
- si le second test éthylique est positif, la réalisation d'un troisième test éthylique au moyen de l'éthylomètre externe (24), l'immobilisation du véhicule (12) étant confirmée si le troisième test éthylique est positif, et
- si le troisième test éthylique est négatif, l'activation des moyens (26) pour autoriser la mise en marche du véhicule.

## Patentansprüche

1. Sicherheitssystem (10) für ein Fahrzeug, insbesondere ein Schienenfahrzeug (12), umfassend wenigstens ein fahrzeugseitiges Alkoholmessgerät (16), das mit einer Steuerzentrale (18) des Fahrzeugs (12) verbunden ist, um das Starten des Fahrzeugs (12) von einem Alkoholtestergebnis abhängig zu machen, wobei die Steuerzentrale (18) dazu ausgebildet ist, das Starten des Fahrzeugs (12) bei einem negativen Alkoholtest freizugeben und bei einem positiven Alkoholtest zu sperren,
**dadurch gekennzeichnet, dass** das Sicherheitssystem (10) wenigstens ein externes Alkoholmessgerät (24) umfasst, und die Steuerzentrale (18) Mittel (26) aufweist, um das Starten des Fahrzeugs (12) zuzulassen, wenn zwei aufeinanderfolgende Alkoholtests ein positives Ergebnis zeigen, aber ein vom externen Alkoholmessgerät (24) durchgeführter Alkoholtest ein negatives Ergebnis zeigt.

2. Sicherheitssystem (10) nach Anspruch 1, umfassend eine FahrerIdentifizierungsvorrichtung (20) zur Ermittlung einer Fahrerkennung, die mit dem Alkoholmessgerät (16) verbunden ist, um jeden Alkoholtest der Fahrerkennung zuzuordnen.

3. Sicherheitssystem (10) nach Anspruch 2, wobei die Steuerzentrale (18) dazu ausgebildet ist, nach einem negativen Test einen neuen Alkoholtest anzufordern, wenn die Fahreridentifizierungsvorrichtung (20) eine neue Kennung identifiziert.

4. Sicherheitssystem (10) nach einem der vorhergehenden Ansprüche, wobei die Steuerzentrale (18) dazu ausgebildet ist, nach einem negativen Test einen neuen Alkoholtest anzufordern, wenn das Fahrzeug (12) für eine erste vorbestimmte Zeit angehalten wurde und der negative Test nach einer Zeit durchgeführt wurde, die länger als eine zweite vorbestimmte Zeit, beispielsweise 30 Minuten, ist.

5. Sicherheitssystem (10) nach einem der vorhergehenden Ansprüche, welches dazu bestimmt ist, ein Fahrzeug (12) auszustatten, mit wenigstens zwei Fahrerkabinen (14), wobei das Sicherheitssystem (10) wenigstens ein Alkoholmessgerät (16) pro Fahrerkabine (14) umfasst.

6. Sicherheitssystem (10) nach einem der vorhergehenden Ansprüche, wobei die Mittel (26) zum Freigeben des Fahrzeugs (12) so gesichert sind, dass sie nur von zuvor autorisierten Personen, beispielsweise durch einen Ausweis und/oder ein Passwort, aktiviert werden können.

7. Sicherheitssystem (10) nach einem der vorhergehenden Ansprüche, umfassend Mittel (22) zur Anzeige von Anweisungen für das Vorgehen beim Starten des Fahrzeugs, die für den Fahrer bestimmt sind.

8. Fahrzeug, insbesondere Schienenfahrzeug (12), **dadurch gekennzeichnet, dass** es ein Sicherheitssystem (10) gemäß einem der vorhergehenden Ansprüche umfasst.

9. Sicherheitsverfahren für ein Fahrzeug, insbesondere für ein Schienenfahrzeug (12), mittels eines Sicherheitssystems (10) nach einem der Ansprüche 1 bis 7, umfassend:
- Durchführung eines ersten Alkoholtests mittels des eingebauten Alkoholmessgeräts (16) und Starten des Fahrzeugs (12), wenn der erste Alkoholtest negativ ist,
- wenn der erste Alkoholtest positiv ist, Durchführung eines zweiten Alkoholtests mittels des eingebauten Alkoholmessgeräts (16) und Starten des Fahrzeugs (12), wenn der zweite Alkoholtest negativ ist,
- wenn der zweite Alkoholtest positiv ist, Durchführung eines dritten Alkoholtests mit dem externen Alkoholmessgerät (24), wobei die Stilllegung des Fahrzeugs (12) bestätigt wird, wenn der dritte Alkoholtest positiv ist, und
- wenn der dritte Alkoholtest negativ ist, Aktivierung der Mittel (26) zur Freigabe des Fahrzeugs.

## Claims

1. A safety system (10) for a vehicle, in particular a rail vehicle (12), comprising at least one on-board breathalyser (16) connected to a control centre (18) of the vehicle (12) to condition the start-up of the vehicle (12) to an ethyl test result, the control centre (18) being configured to authorise the start-up of the vehicle (12) in the case where an ethyl test has a negative result and block the start-up in the case where the ethyl test has a positive result, **characterised in that** the safety system (10) comprises at least one external breathalyser (24), and the control centre (18) comprises means (26) for authorising the start-up of the vehicle (12) in the case where two successive ethyl tests have a positive result, but one ethyl test performed by the external breathalyser (24) has a negative result.

2. The safety system (10) according to claim 1, comprising a device (20) for identifying a driver, intended to determine an identifier of the driver, and connected to the breathalyser (16) to associate each ethyl test with the identifier of the driver.

3. The safety system (10) according to claim 2, wherein the control centre (18) is configured to request a new ethyl test after a negative test when the driver identification device (20) identifies a new identifier.

4. The safety system (10) according to any one of the preceding claims, wherein the control centre (18) is configured to request a new ethyl test after a negative test in the case where the vehicle (12) has been stopped for a first predetermined duration, and the negative test has been performed for a duration longer than a second predetermined duration, for example 30 minutes.

5. The safety system (10) according to any one of the preceding claims, intended to equip a vehicle (12) comprising at least two driver's cabs (14), the safety system (10) comprising at least one breathalyser (16) per driver's cab (14).

6. The safety system (10) according to any one of the preceding claims, wherein the means (26) for authorising the start-up of the vehicle (12) are secured so as to be activated only by persons who have been authorised beforehand, for example identified by a badge and/or a password.

7. The safety system (10) according to any one of the preceding claims, comprising means (22) for displaying instructions on the procedure to be followed for the start-up of the vehicle, intended for the driver.

8. A vehicle, in particular a rail vehicle (12), **characterised in that** it comprises a safety system (10) according to any one of the preceding claims.

9. A safety method for a vehicle, in particular for a rail vehicle (12), by means of a safety system (10) according to any one of claims 1 to 7, comprising:
- carrying out a first ethyl test using the on-board breathalyser (16), and starting up the vehicle (12) if the first ethyl test is negative,
- if the first ethyl test is positive, carrying out a second ethyl test using the on-board breathalyser (16), and starting up the vehicle (12) if the second ethyl test is negative,
- if the second ethyl test is positive, carrying out a third ethyl test by means of the external breathalyser (24), the immobilisation of the vehicle (12) being confirmed if the third ethyl test is positive, and
- if the third ethyl test is negative, activating the means (26) to authorise the start-up of the vehicle.
